# FASCICULE DE BREVET EUROPEEN

(11) **EP 1 324 175 B1**
(45) Date de publication et mention de la délivrance du brevet: **20.06.2018**
(21) Numéro de dépôt: 02293126.5
(22) Date de dépôt: 17.12.2002
(51) Int. Cl.: G06F 21/72

(54) **MODULE DE SECURISATION DE DONNEES PAR CHIFFREMENT/DECHIFFREMENT ET/OU SIGNATURE/VERIFICATION DE SIGNATURE**
MODUL ZUR DATENSICHERUNG MITTELS SCHLÜSSELUNG/ENTSCHLÜSSELUNG UND/ODER UNTERSCHRIFT/UNTERSCHRIFTSPRÜFUNG
MODULE FOR SECURING DATA BY ENCRYPTION/DECRYPTION AND/OR SIGNATURE/VERIFICATION OF SIGNATURE

(30) Priorité: 28.12.2001 FR 0117043
(43) Date de publication de la demande: 02.07.2003
(73) Titulaire: Bull SAS, 78340 Les Clayes-sous-Bois (FR)
(72) Inventeur: Le Quere, Patrick, 91140 Villebon sur Yvette (FR)
(74) Mandataire: Bonnet, Michel

(56) Documents cités:
- WO-A-00/76119
- WO-A-01/05086
- WO-A-01/76129
- WO-A1-01/61912
- WO-A1-01/84769
- US-B1- 6 199 121
- BRILANTES F ET AL: "METHODS FOR ADAPTING THE SCSI INTERFACE FOR USE WITH AN ENCRYPTION MODULE" MOTOROLA TECHNICAL DEVELOPMENTS, MOTOROLA INC. SCHAUMBURG, ILLINOIS, US, vol. 32, 1 septembre 1997 (1997-09-01), pages 124-127, XP000741157 ISSN: 0887-5286

## Description

L'invention est relative à un module de sécurisation de données, numériques, par chiffrement/déchiffrement et/ou signature/vérification de signature.

Plus particulièrement, l'invention est relative à un ordinateur du type comportant une carte mère, comportant un premier microprocesseur, une mémoire de travail associée au premier microprocesseur et un connecteur, et une carte à fonction cryptographique, introduite dans le connecteur de la carte mère, et comportant un second microprocesseur, une mémoire de clés, et un module de sécurisation de données par chiffrement/déchiffrement et/ou signature/vérification de signature, ce module comportant une pluralité de circuits de sécurisation, et au moins un module d'interfaçage commun, situé entre le premier microprocesseur et la pluralité de circuits de sécurisation, les circuits de sécurisation étant connectés en parallèle audit module d'interfaçage commun, et permettant chacun d'assurer le chiffrement/déchiffrement, respectivement le calcul/vérification de signature, de données reçues dudit, respectivement transmises vers ledit, module d'interfaçage commun, chaque circuit de sécurisation comportant :
- un sous-module d'entrée/sortie de sécurisation interconnecté audit module d'interfaçage commun ; et,
- un sous-module spécifique de chiffrement/déchiffrement, respectivement de calcul/vérification de signature.

Un tel ordinateur est par exemple connu du document WO 2001/05086 A2.

Les processus de sécurisation de données par chiffrement/déchiffrement et/ou par signature/vérification de signature sont, à l'heure actuelle, devenus cruciaux, en raison de l'augmentation croissante des échanges de données de toute nature, d'une part, et de la banalisation de moyens informatiques très puissants, susceptibles de permettre à des individus peu scrupuleux des accès non autorisés à des données transitant en réseau, d'autre part.

Afin de faire face à l'acuité des problèmes précités, les développements de solutions techniques ont, à l'heure actuelle, proposé des produits cryptographiques réalisés sous forme de circuits intégrés, de type ASIC par exemple. Chaque circuit de ce type est alors réalisé en vue d'une application bien déterminée et dont la conception est conduite en deux étapes :
- une première étape consistant en une conception logique du produit cryptographique, et
- une deuxième étape, dite de placement routage, de la responsabilité du fondeur de circuits intégrés, et consistant à traduire les fonctions logiques en termes physiques de circuits électroniques.

En raison de l'association, nécessaire, de compétences distinctes, les opérations de développement des circuits intégrés de type ASIC précités sont très onéreuses en temps et en ressources de développement. Pour cette raison, de tels circuits ne peuvent être développés, à une échelle industrielle, que pour des séries dépassant au moins la dizaine de milliers.

En outre, de par leur nature de circuits dédiés, ces derniers ne peuvent prétendre à une large flexibilité d'utilisation, ce qui bien entendu nuit à la faculté de leur diffusion.

Afin de pallier les inconvénients relatifs à la mise en oeuvre des circuits intégrés précités, il est nécessaire de satisfaire simultanément à plusieurs critères spécifiques, parmi lesquels :
- utilisation de technologies programmables, en lieu et place des circuits intégrés de type ASIC ;
- exigence d'un niveau de performances comparable à celui de ces derniers, tant en ce qui concerne le niveau de sécurisation des données, la vitesse de traitement et le taux de transmission des données sécurisées ;
- possibilité de réutilisation de composants de cryptographie dans des environnements distincts, en particulier dans le cadre de différents types d'architecture mémoire, afin d'obtenir une souplesse ou flexibilité d'utilisation maximale ;
- possibilité d'implanter, dans ces composants de cryptographie, des processus ou algorithmes de chiffrement/déchiffrement et/ou de calcul/vérification de signature spécifiques inédits, dits propriétaires, sans toutefois introduire de changement dans l'architecture de ces derniers ;
- possibilité d'exécution simultanée, en mode multitâches, de plusieurs processus ou algorithmes de sécurisation de données, en l'absence de dégradation du niveau de performances, tout en permettant l'introduction d'une diversification des processus de sécurisation ;
- rationalisation et systématisation de processus de sécurisation par constitution de blocs de sécurisation sensiblement indépendants.

Vis-à-vis des critères précités, les solutions actuellement connues disponibles apparaissent particulièrement peu adaptées.
. Une première solution peut consister à faire appel à une utilisation de composants standard disponibles dans le commerce. Cette solution, bien que présentant l'intérêt d'une mise en oeuvre rapide, ne satisfait pas aux critères précités. En particulier, chaque produit de cryptographie doit, même avec l'utilisation des composants standard précités, faire l'objet d'une conception et d'une mise en oeuvre spécifiques. Il doit en outre utiliser des composants différents, en particulier en présence de circuits d'interfaçage mémoire différents et non compatibles. Dans une telle situation, il n'existe enfin aucune véritable maîtrise de la technologie de sécurisation des données, car les composants de cryptographie, constitutifs du coeur du produit de cryptographie, sont achetés à un fournisseur qui, en général, ne communique pas toutes les informations relatives à son produit, afin d'en préserver l'inviolabilité supposée. De même, l'implantation de processus ou algorithmes de sécurisation de données spécifiques n'est aucunement aisée, une telle implantation devant, dans un tel cas, être réalisée sur un composant distinct.
. Une deuxième solution consiste en la mise en oeuvre de solutions au cas par cas. Si les technologies programmables peuvent apparaître adaptées à ce type de solution, l'inconvénient majeur d'une telle approche réside dans l'absence de possibilité de pérenniser la maîtrise des implantations de processus ou algorithmes de sécurisation des données pour d'autres cas d'utilisation, alors qu'en outre, elle ne permet pas de rationaliser les ressources de développement, car l'opération de redéfinition et de reconception est très importante pour chaque cas. L'implantation de processus ou d'algorithmes de sécurisation propriétaires est, de ce fait, d'autant plus coûteuse en prestations de conception et de développement.

La présente invention a pour but de remédier aux inconvénients précités.

Pour cela, l'invention a pour objet un ordinateur conforme aux revendications.

Cet ordinateur met en oeuvre un module de sécurisation de données, par chiffrement/déchiffrement et/ou signature/vérification de signature, à partir d'une technologie programmable, de type FPGA (Field Programmable Gate Array).

En particulier, cet ordinateur met en oeuvre des composants modulaires de sécurisation de données permettant d'atteindre un niveau de performance équivalent à celui fourni par les solutions classiques des circuits intégrés de type ASIC.

Cet ordinateur met en oeuvre un module de sécurisation de données susceptible d'être réutilisé dans différentes architectures ou environnements matériels, ce module de sécurisation pouvant être implanté sur différents types de cartes électroniques, afin de favoriser ainsi la réalisation d'économies substantielles de coûts de développement.

Cet ordinateur met en oeuvre un module de sécurisation de données par chiffrement/déchiffrement et/ou signature/vérification de signature permettant la mise en oeuvre successive ou simultanée d'une pluralité d'automates de sécurisation, à l'initiative de l'utilisateur, chaque automate de sécurisation pouvant correspondre à un processus de chiffrement/déchiffrement et/ou de signature/vérification de signature spécifique ou propriétaire, voire inédit.

Le module de sécurisation de données par chiffrement/déchiffrement et/ou signature/vérification de signature de cet ordinateur est piloté par un microprocesseur, auquel est associé une mémoire de travail.

Il comprend au moins un module d'interfaçage commun entre le microprocesseur et les circuits du module de sécurisation.

Les circuits internes du module de sécurisation comportent, connectés en parallèle au module d'interfaçage, une pluralité de circuits de sécurisation permettant chacun d'assurer le chiffrement/déchiffrement, respectivement le calcul/vérification de signature, de données reçues du, respectivement transmises vers, le module d'interfaçage commun. Chaque circuit de sécurisation comporte un sous-module d'entrée/sortie de sécurisation, interconnecté au module d'interfaçage, et un sous-module spécifique de chiffrement/déchiffrement, respectivement de calcul/vérification de signature.

Le module de sécurisation de données trouve application à la mise en oeuvre de produits de sécurisation de données sous forme de cartes électroniques enfichables dans le connecteur (slot) d'un micro-ordinateur utilisé comme centre serveur par exemple, hébergeant les services en ligne très élaborés ou, au contraire, de petits services télématiques.

Les caractéristiques techniques et fonctionnelles du module de sécurisation de données par chiffrement/déchiffrement et/ou signature/vérification de signature seront mieux comprises à la lecture de la description et à l'observation des dessins ci-après, dans lesquels :
- la figure 1a représente, à titre purement illustratif, une configuration spécifique d'un environnement permettant la mise en oeuvre d'un module de sécurisation de données ;
- la figure 1b représente, à titre illustratif, un schéma synoptique général de l'architecture d'un module de sécurisation de données ;
- la figure 2a représente, à titre illustratif, un schéma synoptique relatif à un automate de sécurisation de données mis en oeuvre par l'intermédiaire d'un module de sécurisation de données, tel que représenté en figure 1b ;
- la figure 2b représente, à titre illustratif, la structure d'un bloc de commande permettant de lancer l'exécution de toute opération de chiffrement/déchiffrement respectivement de signature/vérification de signature par un automate de sécurisation, tel que représenté en figure 2a ;
- la figure 2c représente, à titre purement illustratif, une succession des étapes mises en oeuvre ;
- la figure 3a représente, à titre purement illustratif, un mode de mise en oeuvre non limitatif d'un module d'interfaçage commun permettant la réalisation d'un module de sécurisation de données de manière préférentielle ;
- la figure 3b représente, à titre purement illustratif, un détail de réalisation du module de comptage de commandes et d'interruptions incorporé dans le module d'interfaçage commun représenté en figure 3a et permettant la mise en oeuvre d'un fonctionnement sensiblement continu du module de sécurisation de données ;
- la figure 3c représente, à titre purement illustratif, un processus d'interfaçage générique entre le module d'interfaçage commun, représenté en figure 3a, et la mémoire de travail représentée en figure 1a ;
- la figure 4 représente, à titre purement illustratif, un mode de mise en oeuvre non limitatif d'un sous-module d'entrée/sortie de sécurisation interconnecté au module d'interfaçage commun, tel que représenté en figure 3a ;
- la figure 5 représente, à titre purement illustratif, un schéma synoptique relatif à un processus d'interfaçage entre un sous-module d'entrée/sortie de sécurisation, tel que représenté en figure 4, et un sous-module spécifique de chiffrement/déchiffrement respectivement de calcul/vérification de signature, l'ensemble des deux sous-modules précités formant un circuit de sécurisation constituant un automate de sécurisation.

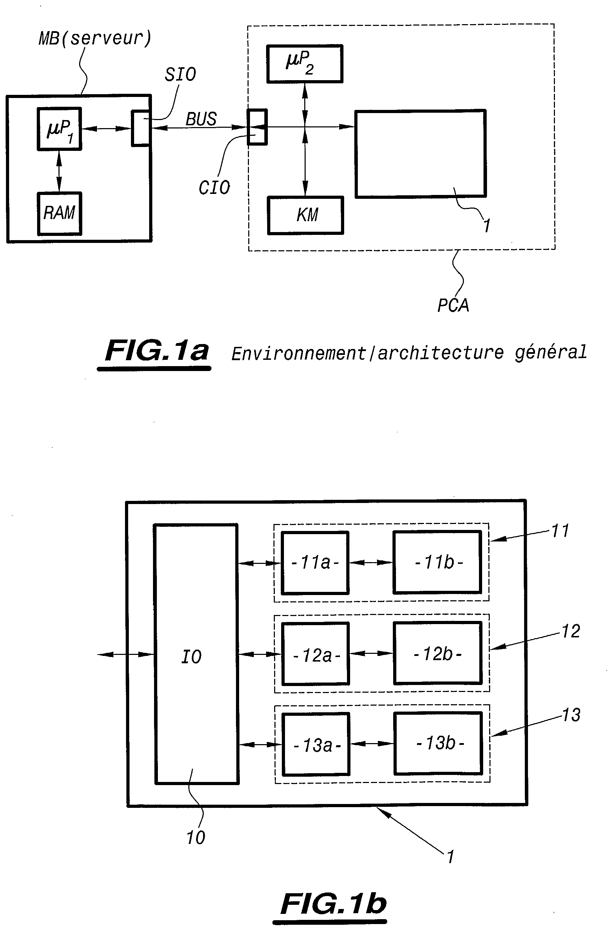

Le module de sécurisation de données par chiffrement/déchiffrement et/ou signature/vérification de signature sera maintenant décrit de manière plus détaillée en liaison avec la figure 1a et les figures suivantes.

Sur la figure précitée, on a représenté, à titre purement illustratif, une configuration spécifique d'un environnement permettant la mise en oeuvre d'un module de sécurisation de données.

D'une manière générale, on indique que la notion de sécurisation de données concerne d'une part les opérations de chiffrement/déchiffrement de données numériques ainsi que les processus de calcul respectivement de vérification de signature de ces données et leur authentification.

D'une manière plus spécifique, on indique que les processus de chiffrement/déchiffrement et de calcul de signature/vérification de signature précités concernent des processus ou algorithmes à clés symétriques par exemple ou à clés dissymétriques, les algorithmes de chiffrement à clés symétriques impliquant l'utilisation d'une seule clé secrète pour la mise en oeuvre des opérations de chiffrement/déchiffrement et/ou de calcul de signature respectivement de vérification de signature et les algorithmes ou processus à clés dissymétriques impliquant l'utilisation d'une clé publique et d'une clé privée, la clé privée étant maintenue secrète et la clé publique pouvant être diffusée par exemple.

En référence à la figure 1a, on indique que le module de sécurisation de données est mis en oeuvre dans le cadre d'un produit de cryptographie en forme de carte à fonction cryptographique désignée PCA sur la figure 1a, cette carte comprenant, ainsi que représenté sur la figure précitée, un microprocesseur ou microcontrôleur µP₂ et une mémoire de clés notée KM. Le module de sécurisation de données 1 est interconnecté au microprocesseur et à la mémoire de clé KM par l'intermédiaire d'une liaison par bus, l'ensemble étant relié à un connecteur d'entrée/sortie noté CIO. La carte à fonction cryptographique ainsi formée est destinée à être introduite dans un connecteur, de type slot, noté SIO ménagé dans la carte mère MB d'un ordinateur, tel qu'un serveur par exemple, cet ordinateur comportant un microprocesseur µP₁ et une mémoire de travail RAM. Sur la figure 1a, on a ainsi représenté l'ensemble de la carte à fonction cryptographique PCA et de la carte mère MB relié par l'intermédiaire d'une liaison par bus, tel qu'un bus PCI par exemple.

En référence à la même figure 1a, on indique que le module de sécurisation de données 1 est piloté par un microprocesseur, le microprocesseur µP₁, auquel est associée la mémoire de travail RAM de l'ordinateur hôte comprenant la carte mère MB. On comprend ainsi que le microprocesseur de pilotage µP₁ et la mémoire de travail RAM sont externes au module 1 de sécurisation de données.

Ce dernier sera maintenant décrit en liaison avec la figure 1b.

Ainsi que représenté sur la figure précitée, le module de sécurisation de données comprend, au moins, un module 10 d'interfaçage commun entre le microprocesseur µP₁ et les circuits internes du module de sécurisation, ce module d'interfaçage commun ayant essentiellement pour objet de gérer les entrées/sorties de données entre le module de sécurisation de données 1 et les circuits internes précités.

Ces circuits internes sont formés par une pluralité de circuits de sécurisation notés 11, 12, 13 sur la figure 1b, ces circuits de sécurisation étant connectés en parallèle au module d'interfaçage 10, ainsi que représenté au dessin.

Chacun des circuits de sécurisation permet d'assurer le chiffrement/déchiffrement respectivement le calcul/la vérification de signature de données reçues respectivement transmises vers le module d'interfaçage commun 10.

Ainsi que représenté en outre sur la figure 1b, chaque circuit de sécurisation comporte un sous-module d'entrée/sortie de sécurisation portant la référence a interconnecté au module d'interfaçage 10 et un module spécifique de chiffrement/déchiffrement respectivement de calcul/vérification de signature portant la référence b. Ainsi, les sous-modules d'entrée/sortie de sécurisation sont référencés 11a, 12a et 13a et les sous-module spécifiques de chiffrement/déchiffrement respectivement de calcul/vérification de signature sont référencés 11b, 12b et 13b sur la figure 1b précitée.

A l'observation de la figure 1b, on comprend que chaque circuit de sécurisation est mis en oeuvre à partir des mécanismes suivants :
- définition de chaque processus ou algorithme de chiffrement/déchiffrement ou calcul/vérification de signature en deux blocs logiques : l'un des blocs comprenant le coeur de l'algorithme proprement dit spécifique de ce dernier et correspondant aux blocs 11b, 12b et 13b de la figure 1b pour chacun des circuits de sécurisation et l'autre bloc sensiblement identique pour chacun des circuits de sécurisation et, en définitive, pour chacun des processus ou algorithmes retenus comprenant des dispositifs d'entrée/sortie avec la mémoire externe et portant ainsi les références 11a, 12a et 13a sur la figure 1b.
   De préférence, chaque bloc, c'est-à-dire chaque sous-module 11a, 12a et 13a respectivement 11b, 12b et 13b, est muni d'une horloge distincte afin de permettre une optimisation des transferts de données à chiffrer ou chiffrées respectivement à soumettre à signature ou à vérification de signature indépendamment du type d'algorithme utilisé vis-à-vis du sous-module d'entrée/sortie mis en oeuvre ;
- mise en oeuvre d'un bloc commun d'interfaçage vers l'ensemble des mémoires externes, c'est-à-dire la mémoire RAM de l'ordinateur hôte précédemment mentionné, permettant à chaque processus ou algorithme de sécurisation de données de fonctionner en l'absence de connaissance du type de mémoire extérieur au module de sécurisation de données

Ainsi qu'on l'observera sur la figure 1b, les circuits de sécurisation 11, 12 et 13 peuvent, le cas échéant, être formés par des circuits de sécurisation identiques, c'est-à-dire mettant en oeuvre non seulement des sous-modules d'entrée/sortie de sécurisation identiques, mais également des sous-modules de chiffrement/déchiffrement respectivement de calcul/de vérification de signature identiques. Dans un tel cas, une telle architecture permet d'assurer un traitement parallèle de sécurisation des données et d'augmenter en conséquence le débit de données traitées pour une application donnée par exemple.

En référence à la même figure 1b, et grâce à l'architecture parallèle retenue pour chaque circuit de sécurisation 11, 12, 13, on indique que chaque circuit de sécurisation peut ainsi être constitué en un automate de sécurisation, lequel opère sous le contrôle du microprocesseur µP₁ par l'intermédiaire du module d'interfaçage commun 10 précédemment mentionné.

De préférence, l'automate de sécurisation précité opère sous le contrôle du microprocesseur en mode d'accès direct mémoire, le microprocesseur, dans ce but, procédant à une initialisation de l'automate par communication d'une adresse en mémoire de travail relative à un bloc de commande de ce dernier, ainsi qu'il sera décrit ci-après dans la description.

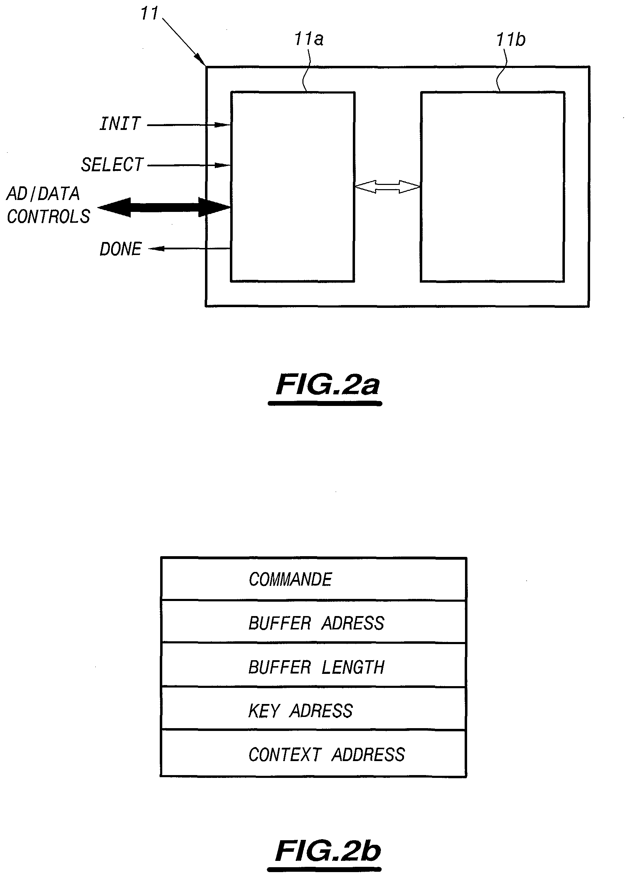

Le mode opératoire d'un automate de sécurisation, formé par l'un des circuits de sécurisation 11, 12 et 13 de la figure 1b, sera maintenant décrit en liaison avec les figures 2a et 2b.

De manière plus spécifique, on indique, en référence à la figure 2a, que le mode opératoire relatif à chaque automate de sécurisation s'applique à n'importe quel des automates 11, 12 ou 13 représentés sur la figure 1b.

Ainsi, en référence à la figure 2a, on indique que chaque automate travaillant sous le contrôle d'un microprocesseur, le microprocesseur µP₁, en mode d'accès direct mémoire, peut opérer dans les conditions ci-après.

Préalablement à l'exécution de tout ordre de commande, un ordre de commande étant constitué par un bloc de commande, tel que décrit ci-après en figure 2b, le microprocesseur µP₁ procède à l'initialisation de l'automate en communiquant à ce dernier l'adresse en mémoire de la zone de commande qui lui est destinée. Une telle opération est effectuée au moyen de l'envoi d'un signal dit d'initialisation noté INIT. Le signal d'initialisation précité comporte par exemple la valeur de l'adresse mémoire localisée dans la mémoire de travail externe dans laquelle le bloc de commande qui lui est destiné est mémorisé.

Lorsque le signal d'initialisation INIT est lancé, la valeur de ce dernier étant positionnée à la valeur logique 1, l'automate correspondant procède à la lecture sur le bus de données, désigné par AD/DATA sur la figure 2a, de la valeur de l'adresse mémoire relative au bloc de commande qui lui est destiné.

Une telle opération de lecture est exécutée par l'intermédiaire d'une part, de chaque sous-module d'entrée/sortie de sécurisation de l'automate correspondant 11a, 12a et 13a et, d'autre part, du module d'interfaçage commun 10.

Lorsque cette adresse a été mémorisée par l'automate, ce dernier est alors en mesure d'exécuter la commande correspondant au bloc de commande précité, le bloc de commande correspondant ayant été placé par le microprocesseur de l'ordinateur hôte, microprocesseur µP₁, dans la zone mémoire dont l'adresse correspond à l'adresse précitée dans la mémoire de travail externe RAM.

En référence à la figure 2b, on indique que la structure d'un bloc de commande peut avantageusement être la suivante, de manière à comporter un champ de commande dit champ COMMANDE, un champ d'adresse de mémoire, dit champ BUFFER ADDRESS, un champ de longueur de la zone mémoire considérée, dit BUFFER LENGTH, un champ d'adresse de clé, dit champ KEY ADDRESS et un champ d'adresse de contexte dit champ CONTEXT ADDRESS, lesquels seront explicités ci-après.

Le champ de commande est spécifique du processus ou algorithme de chiffrement/déchiffrement respectivement signature/vérification de signature mis en oeuvre par l'automate considéré. A titre d'exemple non limitatif, on rappelle que, pour la mise en oeuvre d'automates de sécurisation utilisant des clés de chiffrement symétriques, les algorithmes précités peuvent correspondre à l'algorithme DES, 3DES ou RC4 par exemple et les algorithmes d'authentification aux algorithmes SHA ou MD5 par exemple. On rappelle que, pour les algorithmes d'authentification, c'est-à-dire de signature et de vérification de signature de données, ces algorithmes ou processus permettent de calculer, à partir d'une fonction de hachage, un condensé des données, lequel est soumis à signature dans les conditions connues en tant que telles lors de la mise en oeuvre des algorithmes précités.

Bien entendu, et de manière particulièrement avantageuse, en raison de l'architecture parallèle et modulaire du module de sécurisation de données, on rappelle que les processus ou algorithmes de chiffrement/déchiffrement respectivement de signature/vérification de signature incorporés dans chaque automate de sécurisation peuvent, si nécessaire, être des algorithmes dits propriétaires, voire le cas échéant, inédits.

Le champ de commande contient au minimum les informations ci-après :
- utilisation d'une clé quand celle-ci est optionnelle, par exemple, lors de l'utilisation d'algorithmes tels que HMAC-SHA, HMAC-MD5 ;
- gestion d'un contexte ou non, la notion de contexte étant constituée par l'ensemble des paramètres pertinents de l'algorithme ou processus mis en oeuvre, lesquels doivent être sauvegardés entre chaque commande lorsque celle-ci s'applique à des zones mémoire tampon encore désignées BUFFER de données chaînées. Ceci est par exemple le cas lorsqu'une mémoire tampon de données est trop grande pour être traitée par une seule commande et doit être scindée en plusieurs zones mémoire tampon de taille plus petite. Le chiffrement doit, dans ces conditions, reprendre à l'endroit précis où il s'était arrêté pour la mémoire tampon précédente, même si, entre temps, l'automate de sécurisation a été amené à exécuter une commande pour une mémoire tampon distincte. La taille des données de contexte dépend du type d'algorithme ou processus de sécurisation de données utilisé. Les données ci-après sont données à titre d'exemple non limitatif :
- DES/3DES données de contexte = 1 mot de 64 bits,
- RC4 données de contexte = 258 octets (bytes),
- SHA données de contexte = 20 octets (bytes),
- MD5 données de contexte =16 octets.

Les commandes associées au bloc de commande précité présentent donc le type générique suivant :
- chiffrement en l'absence de contexte ;
- chiffrement avec sauvegarde d'un contexte pour la première zone de mémoire tampon ;
- chiffrement avec chargement d'un contexte pour la dernière zone de mémoire tampon ;
- chiffrement avec chargement et sauvegarde d'un contexte pour toute zone mémoire tampon intermédiaire.

Le champ d'adresse de zone mémoire tampon, dit BUFFER ADDRESS, pointe sur la zone mémoire tampon de données à chiffrer en mémoire de travail RAM externe. Dans ces conditions, l'automate de sécurisation de données écrit les données chiffrées à la même adresse que les données d'entrée et procède ainsi à un écrasement de la zone mémoire tampon contenant les données d'entrée.

Le champ longueur de mémoire tampon, dit BUFFER LENGTH, contient la taille de la zone de mémoire tampon à chiffrer. Cette taille est au maximum de 32 ko.

Le champ d'adresse de clé, dit champ KEY ADDRESS, contient l'adresse de la clé de chiffrement ou d'authentification utilisée. Bien entendu, les clés de sécurisation de données sont mémorisées dans la mémoire de clé KM, telle que représentée en figure 1a, cette mémoire de clé étant, de façon connue en tant que telle, sécurisée, c'est-à-dire rendue physiquement non accessible de manière externe, et non volatile.

La distinction entre les deux types d'adresse, adresse de données et adresse de clé peut avantageusement être effectuée soit par l'intermédiaire d'un bit d'adresse fixe, soit par un signal supplémentaire engendré par l'intermédiaire du module d'interfaçage commun 10, afin de ne pas diminuer la largeur du champ d'adresse exploitable, ce champ étant limité à 32 bits lorsque le bus de liaison est un bus de type PCI entre la carte PCA et la carte mère MB.

Le champ d'adresse de contexte, dit CONTEXT ADDRESS, contient l'adresse de la zone mémoire des données de contexte relative à l'algorithme ou processus de chiffrement ou de vérification de signature utilisé. Cette zone d'adresse peut, bien entendu, se trouver avantageusement dans la mémoire sécurisée correspondant à la mémoire de clé KM.

Enfin, le champ d'adresse de zone mémoire tampon peut lui aussi pointer sur une zone de la mémoire sécurisée précitée afin de permettre à l'automate de sécurisation de chiffrer ou authentifier les clés qu'il appelle pour utilisation.

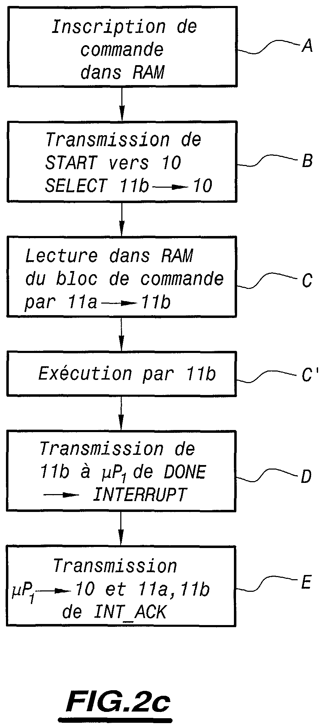

Compte tenu de la structure des blocs de commande précédemment décrits en liaison avec la figure 2b, le mécanisme d'exécution d'une commande est alors le suivant, selon un échange successif de messages, tel qu'illustré en figure 2c :
- en une étape A, inscription, par le microprocesseur µP1, de la commande à exécuter dans la zone mémoire de travail allouée à l'automate ;
- en une étape B, transmission, vers le module d'interfaçage commun 10, d'une commande de déclenchement désignée START permettant d'activer une commande de sélection engendrée par l'automate, la commande de sélection SELECT consistant en une commande de lecture en mémoire de travail de la zone de commande correspondant à l'adresse en mémoire de travail communiquée, cette opération est notée SELECT à l'étape B, la commande de sélection étant transmise par le sous-module 11b vers le sous-module 11a et vers le module d'interfaçage commun 10 ;
- lecture dans la mémoire de travail du bloc de commande par le module d'entrée/sortie de sécurisation 11a et communication pour exécution du bloc de commande correspondant au sous-module spécifique de chiffrement/déchiffrement respectivement de calcul/vérification de signature 11b à l'étape C ;

- étape C' d'exécution du bloc de commande par le sous-module spécifique 11b;
- à l'étape D, transmission du sous-module spécifique 11b au microprocesseur de pilotage µP₁ d'un message de fin d'exécution DONE permettant d'engendrer une interruption de traitement notée INTERRUPT ;
- suite à la réception du message d'interruption de traitement par le microprocesseur de pilotage µP₁, transmission, à l'étape E, du microprocesseur vers le module d'interfaçage et l'automate de sécurisation 10 et 11a, 11b d'un message d'acquittement d'interruption noté INT_ACK.

Dans un mode de réalisation particulièrement avantageux, on indique que l'ensemble des blocs de commande peut être mémorisé sous forme d'une application API au niveau de la mémoire de travail externe RAM. Un tel mode de mise en oeuvre permet, en raison du caractère générique des applications de type API, de fournir un accès aux blocs de commande banalisé et normalisé, c'est-à-dire indépendant de l'environnement et/ou de l'architecture matérielle hôte de la carte PCA.

Ainsi, en référence à la figure 2a, on comprend que chaque automate de sécurisation engendre des messages de commande de lecture respectivement d'écriture de données dans la mémoire de travail externe RAM. Les signaux précités, désignés AD/DATA/CONTROLS sont spécifiques à la lecture/écriture dans la mémoire de travail selon un protocole qui sera décrit ultérieurement dans la description.

En définitive, les seules commandes directes que le microprocesseur de pilotage µP₁ adresse directement à chaque automate de sécurisation sont les suivantes :
- signal de commande START : cette commande permet d'activer le signal de sélection SELECT de l'automate considéré afin que celui-ci procède à la lecture de sa zone de commande et à l'exécution de celle-ci ;
- commande INT_ACK d'acquittement : cette commande est utilisée par le microprocesseur de pilotage µP₁ pour acquitter l'interruption de fin de traitement, c'est-à-dire désactivation du signal de fin d'exécution DONE.

Les commandes précitées sont des écritures à des adresses définies pour chaque mise en oeuvre et qui se traduisent, au niveau de la carte PCA, par l'activation ou la désactivation d'un signal correspondant de l'automate.

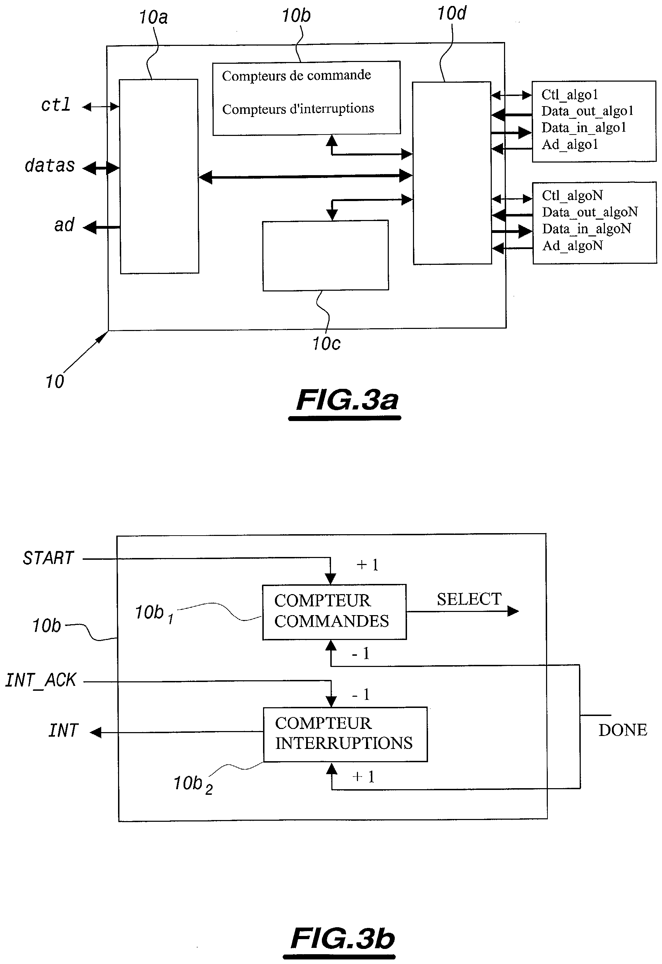

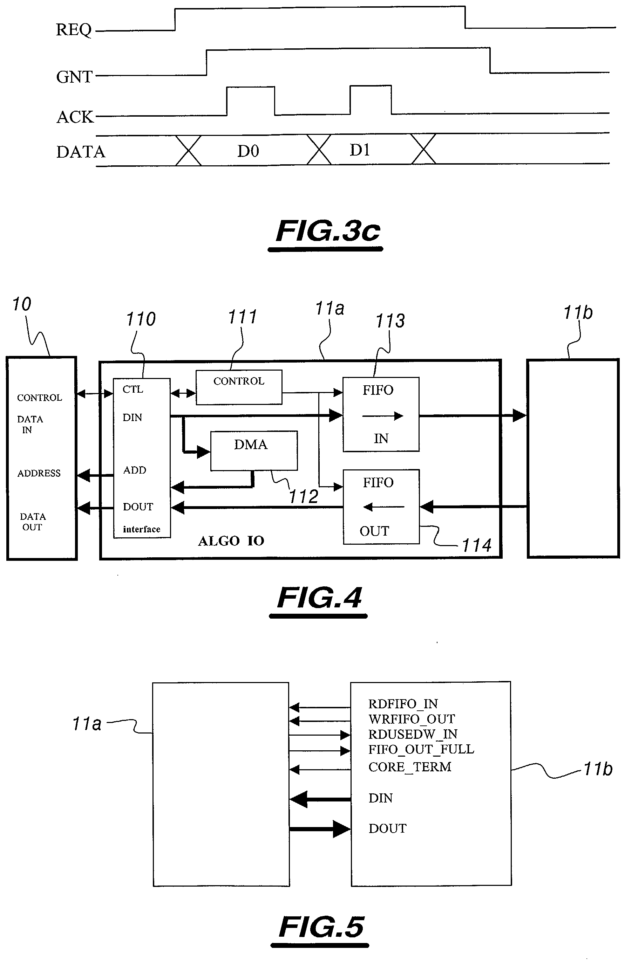

Une description plus détaillée du module d'interfaçage commun 10 sera maintenant donnée en liaison avec les figures 3a, 3b et 3c.

La fonction du module d'interfaçage commun 10 est multiple et, en particulier, a pour objet de :
- multiplexer toutes les opérations d'entrée/sortie des processus ou algorithmes de chiffrement/déchiffrement ou signature/vérification de signature vers la mémoire externe de travail RAM tout en définissant la mise en oeuvre d'un processus d'interfaçage suffisamment générique afin de pouvoir adapter ce dernier à tous les types de mémoire ou de bus tels que bus PCI, PCMCIA ou autre par exemple ;
- arbitrer, entre les accès mémoire de tous les blocs, c'est-à-dire de tous les automates 11, 12 et 13, afin d'optimiser ainsi la bande passante du bus externe de transmission et finalement le débit de données transmises par ce dernier ;
- mettre en oeuvre un système de commande et d'interruption d'une pluralité de blocs de commande, ainsi qu'il sera décrit ci-après, afin de permettre un fonctionnement du module de sécurisation de données, en mode continu ou sensiblement continu.

En référence à la figure 3a, le module d'interfaçage commun comporte ainsi un sous-module 10a d'interface mémoire relié par une liaison par bus à un sous-module d'interface de sécurisation 10d, lequel est en liaison directe avec les données d'entrée/sortie et de commande engendrées par chaque automate de sécurisation.

Les signaux transitant entre le module d'interfaçage commun 10 et chaque automate de sécurisation sont désignés par :
- Ctl_algo1 désignant des signaux de commande d'un des processus de sécurisation désigné par algol ;
- Data_out_algo 1 désignant des données délivrées, c'est-à-dire des donnés chiffrées par l'automate de sécurisation mettant en oeuvre l'algorithme algo 1 ;
- Data_in_algo 1 désignant les données à chiffrer ou à sécuriser, par exemple par l'intermédiaire du processus ou algorithme algo 1, et
- un signal Ad_algo 1 relatif à un signal d'adresse de lecture de la commande correspondante pour la mise en oeuvre de l'algorithme ou processus Algo1. Il en est de même pour tout automate de sécurisation de rang compris entre 1 et N.

Alors que le mode opératoire instruction par instruction de commande, tel que décrit précédemment en liaison avec les figures 2a à 2c, donne satisfaction, le module de sécurisation de données peut être optimisé de façon à obtenir un fonctionnement dit en mode continu grâce à la mise en oeuvre d'un module de comptage de commandes et d'interruptions 10b, tel que représenté sur la figure 3a dans le module d'interfaçage commun 10.

Le mode de fonctionnement en continu permet d'optimiser considérablement les performances d'un automate de sécurisation en désynchronisant le fonctionnement de ce dernier par rapport au microprocesseur de pilotage µP₁. Ce dernier est en effet en mesure de placer en mémoire plusieurs commandes successives d'affilée sans attendre les interruptions de fin d'opération de l'automate, lequel enchaîne alors l'exécution des commandes l'une derrière l'autre en mode sensiblement continu.

Le principe de fonctionnement est alors le suivant : le microprocesseur de pilotage µP₁ gère, par voie logicielle, un premier compteur de commandes qu'il incrémente après chaque activation de l'automate de sécurisation correspondant et qu'il décrémente à chaque réception de l'interruption de fin de traitement. Le compteur logiciel précité permet au processeur de pilotage de vérifier que le nombre maximum de commandes envoyé n'excède pas une valeur limite prédéterminée, cette valeur pouvant par exemple être prise égale à 7. Un compteur identique de même profondeur est installé dans le module d'interfaçage commun 10 au niveau d'un module de compteur de commandes et de compteur d'interruptions 10b et porte la référence 10b₁ sur la figure 3b. Le compteur de commandes 10b₁ est incrémenté à chaque réception de la commande START émise par le microprocesseur de pilotage µP₁. Ce compteur est en outre décrémenté à chaque activation du signal DONE, c'est-à-dire du signal de fin d'exécution de la commande considérée. Tant que le compteur 10b₁ n'a pas atteint la valeur zéro, le signal de sélection SELECT, destiné à l'automate considéré, est rendu actif.

Un deuxième compteur, compteur d'interruptions portant la référence 10b₂, est également prévu dans le module 10b du module d'interfaçage commun 10. Le deuxième compteur, compteur d'interruptions, est incrémenté par le signal de fin d'exécution DONE et décrémenté par la commande d'acquittement d'interruption INT_ACK venant du microprocesseur de pilotage µP₁. Tant que la valeur du deuxième compteur, compteur d'interruptions 10b₂, n'est pas nulle, le signal d'interruptions INT est rendu actif et une interruption est envoyée au microprocesseur de pilotage µP₁.

Enfin, un troisième compteur, non représenté au dessin, jouant le rôle d'un pointeur de commandes, peut être mis en oeuvre par voie logicielle par le microprocesseur de pilotage µP₁ et sous forme d'un composant dans le sous-module d'entrée/sortie 11a, 12a, 13a de sécurisation de chaque automate de sécurisation, ce troisième compteur pouvant être incrémenté d'une valeur égale à la taille de la commande, après chaque envoi d'une commande.

Ainsi que mentionné précédemment dans la description, le nombre maximum de commandes susceptibles d'être mises en oeuvre successivement peut être fixé pour les cartes PCA et pris égal à 7 par exemple.

En référence à la figure 3b, la chronologie des opérations peut alors être la suivante :
- le microprocesseur de pilotage µP₁ vérifie que le compteur de commandes 10b₁ correspondant à celui de l'automate considéré n'est pas plein, la valeur de comptage devant être inférieure à 8 pour cette commande au maximum ;
- le microprocesseur de pilotage µP₁ écrit alors un bloc de commandes en mémoire à l'adresse contenue dans son pointeur de commandes ;
- le microprocesseur de pilotage µP₁ incrémente ce pointeur de la valeur correspondant à la taille de la commande ;
- le microprocesseur de pilotage µP₁ incrémente ensuite son compteur interne de commandes ;
- le microprocesseur de pilotage µP₁ écrit à l'adresse correspondant à la commande START. La taille et la valeur écrites peuvent être quelconques. Cette commande a pour effet d'incrémenter le compteur de commandes interne de l'automate. Tant que ce compteur n'atteint pas la valeur nulle, l'automate de sécurisation traite des commandes, le signal de sélection SELECT étant activé ;
- l'automate lit le bloc de commandes et incrémente son pointeur de commandes en conséquence ;
- l'automate traite la commande correspondante, puis active son signal de fin d'exécution DONE. Cette activation a pour effet d'incrémenter le compteur interne d'interruptions de l'automate de sécurisation considéré et de décrémenter le compteur interne de commandes. Tant que le compteur d'interruptions n'atteint pas une valeur de comptage nulle, une interruption est envoyée au microprocesseur de pilotage µP₁. Tant que le compteur de commandes n'atteint pas une valeur de comptage nulle, l'automate de sécurisation appelle la commande suivante ;
- le microprocesseur de pilotage µP₁, réveillé par l'interruption précitée, procède alors à la décrémentation de son propre compteur de commandes ;
- le processeur acquitte l'interruption en écrivant à l'adresse correspondant à la commande d'acquittement d'interruption INT_ACK. Cette commande a pour effet de décrémenter le compteur d'interruptions de l'automate de sécurisation.

On comprend en outre que le module de compteur de commandes et de compteur d'interruptions 10b, représenté en figure 3a, est optionnel. En effet, un tel module n'est pas nécessaire lorsque la mise en oeuvre ne requiert pas le traitement de commandes en mode continu. Ceci est en particulier le cas lors d'une mise en oeuvre à faible débit par exemple. Il permet, ainsi que mentionné précédemment dans la description, un gain important en performance et, notamment, d'égaliser la valeur du débit des données chiffrées transmises ou soumises à signature/vérification de signature à une valeur optimale proche de la valeur maximale permise par les processus ou algorithmes de sécurisation de données.

Le module d'interfaçage commun, tel que représenté en figure 3a, comporte en outre un module 10c d'arbitrage des priorités d'accès des différents automates à la mémoire de travail externe RAM. Le mode de priorité choisi peut être le mode de priorité tournante. Dans ces conditions, chaque automate de sécurisation demandeur se voit accorder l'accès à la mémoire de travail RAM pour réaliser un transfert de données de 16 mots de 32 bits au maximum. De ce fait, tous les algorithmes et/ou processus de sécurisation de données peuvent accéder à la mémoire à tour de rôle sans perte de performance et en l'absence de tout blocage. D'autres processus d'arbitrage peuvent être choisis.

En ce qui concerne le module d'interfaçage vers la mémoire de travail 10a, le rôle de ce module est de multiplexer les signaux des parties d'entrée/sortie des processus ou algorithmes de sécurisation de données et, en particulier, les contrôles d'adresses et de données vers l'interface mémoire. Le type de multiplexage est fonction de la performance et du nombre des automates de sécurisation connectés. On peut convenir d'un simple multiplexage combinatoire pour des débits de l'ordre de 100 Mbits par seconde par automate ou, au contraire, d'un multiplexage séquentiel plus complexe pour des débits supérieurs.

Enfin, en ce qui concerne le module 10a d'interface mémoire, c'est-à-dire vers la mémoire de travail externe RAM, on indique qu'un tel module d'interfaçage peut comprendre la mise en oeuvre des signaux ci-après :
- un signal de requête REQ, ce signal étant activé pour initialiser un transfert de données en lecture ou en écriture avec la mémoire externe de travail RAM;
- un signal d'allocation de bus mémoire, signal GNT pour GRANT, se signal ayant pour effet d'accorder le bus mémoire au module de sécurisation de données. Ce signal peut précéder ou être activé après un signal de requête ;
- un signal d'acquittement ACK, ce signal étant activé par le contrôleur de mémoire externe à chaque lecture ou écriture effective d'un mot de données de 32 bits ;
- un signal indiquant un cycle d'écriture, signal WR, ce signal étant positionné par le module de sécurisation de données. Un exemple de synchronisation des signaux précités est représenté, à titre non limitatif, en figure 3c.

Un tel module d'interfaçage permet de supporter tous les types de mémoire synchrone ou asynchrone, ainsi que les bus standard, tels que les bus PCI précédemment mentionnés dans la description.

Une description plus détaillée d'un sous-module d'entrée/sortie de sécurisation, tel qu'un sous-module 11a, 12a ou 13a de la figure 1b, sera maintenant donnée en liaison avec la figure 4.

Chaque sous-module précité réalise en fait toutes les opérations d'entrée/sortie indispensables pour l'exécution de tout processus ou algorithme de chiffrement/déchiffrement respectivement de signature/vérification de signature des données à partir du sous-module spécifique correspondant.

De manière plus spécifique, chaque sous-module d'entrée/sortie de sécurisation peut comporter, de manière non limitative en référence au sous-module 11a par exemple, un circuit 110 d'interfaçage connecté au module d'interfaçage commun 10, une mémoire FIFO 113 d'envoi de données interconnectée au circuit d'interfaçage 110 et au sous-module de chiffrement/déchiffrement respectivement de calcul/vérification de signature 11b. La mémoire FIFO 113 permet l'écriture de données dans le module 11b précité.

En outre, une mémoire FIFO de réception de données 114 est prévue, laquelle est interconnectée au circuit d'interfaçage 110 et au sous-module de chiffrement/déchiffrement respectivement calcul/vérification de signature 11b. La mémoire FIFO 114 de réception de données permet la lecture de données dans le sous-module 11b précité.

Un module 111 de commande des mémoires FIFO est prévu afin de permettre la commande d'envoi et de réception des données par ces dernières.

Enfin, un module de contrôle d'accès direct mémoire 112 est interconnecté en entrée et en sortie au circuit d'interfaçage 110 précédemment mentionné.

Pour la réalisation d'opérations d'entrée/sortie de données, le module d'entrée/sortie de sécurisation 11a exécute, suite à l'activation du signal de sélection SELECT précité :
- une lecture en mémoire de travail RAM externe du bloc de commandes à exécuter ;
- une initialisation du module de contrôle d'accès direct mémoire 112, à partir de paramètres contenus dans le bloc de commandes précédemment mentionné, après lecture de ce dernier ;
- une lecture en mémoire de clé KM des clés de sécurisation de données et/ou du contexte de sécurisation de données appliqué par l'automate de sécurisation considéré et, en particulier, par le sous-module 11b spécifique relatif à ce dernier ;
- une lecture en mémoire de travail externe RAM des données à sécuriser et une transmission de ces données au sous-module spécifique de chiffrement/déchiffrement respectivement de calcul/vérification de signature ;
- une écriture en mémoire de travail externe RAM des données sécurisées transmises par le sous-module spécifique 11b précédemment mentionné.

En ce qui concerne le module 112 de contrôle d'accès direct mémoire, celui-ci peut comprendre avantageusement un compteur d'adresses d'entrée, c'est-à-dire mémoire vers automate de sécurisation et un compteur d'adresses de sortie, automate de sécurisation vers mémoire de travail, sur 30 bits initialisé avec l'adresse de la zone mémoire tampon de données au moment de la lecture de la commande. Le premier compteur d'adresses d'entrée est incrémenté à chaque lecture d'un mot en mémoire et le second à chaque écriture.

Un compteur de longueurs d'entrée est un compteur de longueurs de données en sortie sur 30 bits initialisé avec la longueur de la zone mémoire tampon de données BUFF LENGTH au moment de la lecture de la commande. Le premier compteur est décrémenté à chaque lecture d'un mot en mémoire et le second à chaque écriture. L'opération de l'automate de sécurisation est terminée lorsque le dernier mot de la zone de mémoire tampon est écrit en mémoire. Cette condition engendre le signal de fin d'exécution DONE indiquant la fin de traitement de la commande considérée.

En ce qui concerne, de manière plus spécifique, le mode opératoire des mémoires FIFO 113 et 114 d'envoi et de réception de données, on indique que le rôle de ces dernières est double :
- dissocier le fonctionnement du coeur de l'automate de sécurisation, c'est-à-dire du sous-module spécifique de sécurisation de la partie sous-module d'entrée/sortie de sécurisation, afin que chaque partie travaille à sa vitesse propre en fonction de ses seules contraintes de processus interne.

Les deux domaines d'horloge sont alors distincts, chaque sous-module, module 11a et module 11b sur la figure 4, par exemple, comportant de préférence une horloge interne qui lui est propre.

Ainsi, le sous-module 11a peut travailler à la même fréquence pour tous les processus ou algorithmes de sécurisation de données mis en oeuvre par le sous-module spécifique de chiffrement/déchiffrement respectivement de calcul/vérification de signature 11b par exemple. Cette fréquence peut être choisie égale à la fréquence du bus de la carte PCA, c'est-à-dire 33 MHz pour l'ensemble des cartes PCA par exemple. En revanche, la fréquence d'horloge de tout sous-module, tel que le sous-module 11b de sécurisation, peut alors travailler à une fréquence maximale permise compte-tenu de la technologie mise en oeuvre pour chacun des sous-modules précités.
- fournir, à chaque sous-module spécifique 11b par exemple de chiffrement/déchiffrement respectivement de calcul/vérification de signature, un flux de données cadencé à une vitesse satisfaisante et, de manière la plus continue possible, indépendamment des types de mémoire externe et de leur temps d'accès variable. D'une manière générale, pour la mise en oeuvre des mémoires FIFO 113 et 114, on retiendra des mémoires FIFO de profondeur de 64 mots de 32 bits.

En ce qui concerne le circuit 110 d'interfaçage, ce dernier a pour objet d'assurer des échanges de données non chiffrées ou respectivement chiffrées entre les mémoires FIFO 113 d'envoi respectivement de réception 114 et la mémoire externe de travail RAM.

Le protocole d'accès à la mémoire externe RAM dépend, bien entendu, du type de mémoire constitutif de celle-ci, telle que mémoire SDRAM, DPRAM ou bus PCI. Pour cette raison, le protocole d'accès à la mémoire externe est avantageusement mis en oeuvre et implanté de préférence dans le module d'interfaçage commun 10. Le circuit d'interfaçage 110, constitutif d'un circuit d'interfaçage de l'automate de sécurisation considéré, met en oeuvre un protocole générique du type requête REQ/allocation GNT pour GRANT/acquittement ACK sensiblement identique pour tous les automates de sécurisation et indépendant du type de mémoire externe équipant la carte mère MB.

Lorsque le circuit d'interfaçage 110 ou, de manière plus spécifique, le sous-module spécifique d'entrée/sortie de sécurisation 11a par exemple, souhaite procéder à la lecture ou à l'écriture de la mémoire externe RAM, il soumet sa requête au module d'interfaçage commun 10 en activant un signal de requête REQ. Il positionne simultanément l'adresse de la zone mémoire qu'il souhaite atteindre (il peut s'agir de l'adresse de sa zone de commande ou d'une adresse de zone de mémoire tampon en provenance du module 112 de contrôle d'accès direct mémoire précédemment mentionné) ainsi que la longueur du transfert demandé, longueur comprise entre 1 et 16 mots de 32 bits.

Le module de gestion de la priorité d'accès 10c en figure 3a accorde alors l'accès au bus de données à chaque automate de sécurisation selon le mode de priorité choisi, tel que le mode de priorité tournante par exemple. Dans ce but, il procède à l'activation du signal d'allocation d'accès GNT (GRANT). Sur réception du signal précité, le sous-module d'entrée/sortie de sécurisation 11a et, en particulier, le circuit d'interfaçage 110, autorise la lecture ou l'écriture des données dans les mémoires FIFO d'entrée 113 ou de sortie 114. L'activation par le module d'interfaçage commun 10 d'un signal d'acquittement d'entrée ACK_IN indique la disponibilité en lecture d'un mot de données. Ce signal est utilisé pour l'écriture à partir de la mémoire FIFO d'envoi 113 vers le sous-module spécifique de chiffrement/déchiffrement respectivement de calcul/vérification de signature 11b.

L'activation d'un signal ACK_OUT d'acquittement en sortie indique qu'un mot de données, fourni par la mémoire FIFO de réception 114 en provenance du sous-module spécifique 11b, a été envoyé vers la mémoire. Les signaux d'acquittement en entrée et en sortie ACK_IN et ACK_OUT sont utilisés par le module de contrôle d'accès direct mémoire 112 pour faire évoluer ces compteurs d'adresses et de longueurs.

Enfin, une description plus détaillée d'éléments de mise en oeuvre de sous-modules spécifiques de chiffrement/déchiffrement respectivement de calcul/vérification de signature, tels que les sous-modules 11b, 12b et 13b et, en particulier, de leurs échanges de données avec les sous-modules d'entrée/sortie 11a, 12a et 13a, sera donnée maintenant en liaison avec la figure 5.

D'une manière générale, on rappelle que chaque sous-module spécifique de chiffrement/déchiffrement respectivement de calcul/vérification de signature fonctionne avec sa propre horloge. Dans ces conditions, plusieurs modes de mise en oeuvre différents d'un même processus ou algorithme de sécurisation de données peuvent être réalisés pour différentes applications.

La séparation complète du processus ou algorithme de sécurisation de données et de la partie entrée/sortie correspondante permet cette double optimisation et autorise de plus la cohabitation, dans une même architecture, de processus ou algorithmes de sécurisation de données standard et propriétaires, voire même inédits.

Le processus d'interfaçage entre les deux sous-modules ne requiert, outre les deux mémoires FIFO 113 et 114 telles que représentées en figure 4, qu'un simple signal spécifique désigné par CORE_TERM, lequel a pour fonction de signaler aux sous-modules d'entrée/sortie de sécurisation, tel que le module 11a de la figure 5, le chargement des derniers mots chiffrés ou déchiffrés par la partie correspondante de l'automate de sécurisation constituée par le sous-module spécifique 11b.

Le signal de signalisation précité CORE TERM est toutefois inutile dans le cas où le processus ou algorithme de sécurisation de données est un simple algorithme d'authentification qui renvoie un nombre connu et fixe de mots correspondant à la mise en oeuvre de la fonction de hachage précédemment mentionnée dans la description et d'un condensé de longueur sensiblement fixe en fin de traitement. C'est particulièrement le cas lors de la mise en oeuvre des algorithmes SHA et MB5.

En particulier, les signaux de contrôle des mémoires FIFO 113 et 114 utilisés par le sous-module spécifique 11b sont par exemple, ainsi que représenté en figure 5 :
- pour le contrôle de la mémoire FIFO d'envoi de données 113,
   - un signal de contrôle désigné RDUSEDW_IN indiquant le nombre de mots contenu dans la mémoire FIFO d'envoi de données. Cette information est utilisée par le sous-module 11b pour démarrer son traitement dès que le nombre précis de mots de la commande est chargé dans la mémoire FIFO d'entrée 113 et, en cours de traitement, pour aller lire le nombre de mots de données requis par l'algorithme de sécurisation de données mis en oeuvre par le sous-module 11b ;
   - un signal de commande de lecture dans la mémoire FIFO d'envoi 113, signal désigné RDFIFO_IN. Ce signal est activé par le sous-module 11b pour lire un mot de commande ou de données de la mémoire FIFO d'envoi 113 :
- pour le contrôle de la mémoire FIFO de réception de données 114,
   - un signal de commande de temporisation de la sortie des données du sous-module spécifique 11b de chiffrement/déchiffrement respectivement de calcul/vérification de signature, ce signal étant désigné FIFO_OUT_FULL, cette temporisation étant fonction de la disponibilité de la mémoire FIFO de réception de données 114 ;
   - un signal de commande d'écriture dans la mémoire FIFO de réception de données 114 d'un mot de données spécifique, ce signal étant noté WRFIFO_OUT. Ce signal est activé par le module 11b spécifique pour écrire un mot de données dans la mémoire FIFO de réception de données 114.

On a ainsi décrit un module de sécurisation de données par chiffrement/déchiffrement et/ou signature/vérification de signature particulièrement performant, en raison, d'une part, de la souplesse et de la flexibilité d'utilisation des différents automates de sécurisation constitutifs de ce dernier et, d'autre part, des performances de débit et donc de bande passante du bus de liaison de tout composant, tel qu'une carte de type PCA, de sécurisation de données mettant en oeuvre un tel module de sécurisation. En particulier, en ce qui concerne la flexibilité et la souplesse d'utilisation d'un tel module de sécurisation, on indique que, en raison de l'architecture parallèle des automates de sécurisation précités, il est possible d'effectuer un multiplexage des zones de mémoire tampon soumise au processus de sécurisation de données, ces zones de mémoire tampon pouvant être complètement distinctes, ou que, grâce à la mise en oeuvre d'un processus de type multitâches, il est également possible de procéder à des opérations de chiffrement de zones de mémoire tampon spécifiques et de signature de ces mêmes zones de mémoire tampon spécifiques successivement en imbriquant les processus de chiffrement et de signature à partir d'algorithmes tels que l'algorithme DES et l'algorithme SH-A par exemple ou d'autres.

## Revendications

1. Ordinateur du type comportant une carte mère (MB), comportant un premier microprocesseur (µP₁), une mémoire de travail (RAM) associée au premier microprocesseur et un connecteur (SIO), et une carte à fonction cryptographique (PCA), introduite dans le connecteur de la carte mère, et comportant un second microprocesseur (µP₂), une mémoire de clés (KM), et un module (1) de sécurisation de données par chiffrement/déchiffrement et/ou signature/vérification de signature, ce module (1) comportant une pluralité de circuits de sécurisation (11, 12, 13), et au moins un module d'interfaçage commun (10), situé entre le premier microprocesseur et la pluralité de circuits de sécurisation, les circuits de sécurisation étant connectés en parallèle audit module d'interfaçage commun, et permettant chacun d'assurer le chiffrement/déchiffrement, respectivement le calcul/vérification de signature, de données reçues dudit, respectivement transmises vers ledit, module d'interfaçage commun, chaque circuit de sécurisation comportant :
- un sous-module d'entrée/sortie de sécurisation (11a, 12a, 13a) interconnecté audit module d'interfaçage commun (10) ; et,
- un sous-module spécifique de chiffrement/déchiffrement, respectivement de calcul/vérification de signature (11b, 12b, 13b),
**caractérisé en ce que** chaque circuit de sécurisation (11, 12, 13) constituant un automate de sécurisation opère, sous le contrôle du premier microprocesseur (µP₁) par l'intermédiaire du module d'interfaçage commun (10), en mode d'accès direct mémoire dans la mémoire de travail (RAM),
**en ce que** le premier microprocesseur (µP₁) est propre à, pour piloter ledit circuit de sécurisation :
- initialiser un automate par communication d'une adresse d'une zone en mémoire de travail allouée audit automate ;
- inscrire un bloc de commande à exécuter dans la zone en mémoire de travail allouée à un automate initialisé ;
- transmettre vers le module d'interfaçage commun une commande de déclenchement activant une commande de sélection engendrée par un automate initialisé, la commande de sélection consistant en une commande de lecture de la zone en mémoire de travail allouée audit automate initialisé, la commande de sélection étant transmise par le sous-module spécifique de chiffrement/déchiffrement vers le sous-module d'entrée/sortie de sécurisation et vers le module d'interfaçage commun,
et **en ce que** le sous-module d'entrée/sortie de sécurisation (11a, 12a, 13a) est adapté à lire dans la mémoire de travail (RAM) le bloc de commande et à communiquer le bloc de commande au sous-module spécifique de chiffrement/déchiffrement (11b, 12b, 13b) pour exécution.

2. Ordinateur selon la revendication 1, **caractérisé en ce que** ledit module de sécurisation (1) comporte une pluralité de circuits de sécurisation (11, 12, 13) identiques, ce qui permet d'assurer un traitement parallèle de sécurisation des données.

3. Ordinateur selon la revendication 1 ou la revendication 2, **caractérisé en ce que** le premier microprocesseur (µP₁) est propre à inscrire un bloc de commande comportant au moins :
- un champ de définition de commande spécifique du type de processus de sécurisation et d'activation d'un sous-module spécifique de chiffrement/déchiffrement de calcul/vérification de signature (11b, 12b, 13b) ;
- un champ d'adresse de mémoire tampon contenant des données à sécuriser respectivement des données sécurisées ;
- un champ de taille de mémoire tampon ;
- un champ d'adresse de l'adresse de la clé de chiffrement/déchiffrement, calcul/vérification de signature ;
- un champ d'adresse de contexte, ledit contexte permettant de définir des paramètres relatifs au processus de sécurisation des données appelé.

4. Ordinateur selon la revendication 3, **caractérisé en ce que** l'ensemble des blocs de commande relatif à un automate de sécurisation est implanté sous forme d'une application API dans ladite mémoire de travail (RAM).

5. Ordinateur selon l'une des revendications 1 à 4, **caractérisé en ce que**, lors de la réception d'une commande de déclenchement générée par le premier microprocesseur (µP₁), le module de sécurisation (1) est propre à réaliser une :
- lecture, dans ladite mémoire de travail (RAM), dudit bloc de commande par ledit sous-module d'entrée/sortie de sécurisation (11a, 12a, 13a), interconnecté audit module d'interfaçage commun (10) et communication pour exécution dudit bloc de commande audit sous-module spécifique de chiffrement/déchiffrement respectivement de calcul/vérification de signature (11b, 12b, 13b), et suite à exécution dudit bloc de commande par ledit sous-module spécifique ;
- transmission, dudit sous-module spécifique (11b, 12b, 13b) vers ledit premier microprocesseur (µP₁), par l'intermédiaire dudit sous-module d'entrée/sortie de sécurisation (11a, 11b, 11c) et dudit module d'interfaçage (10), d'un message de fin d'exécution permettant d'engendrer une interruption de traitement ; et, suite à la réception de cette interruption de traitement par le premier microprocesseur (µP₁),
- transmission, du premier microprocesseur (µP₁) vers ledit module d'interfaçage commun (10) et ledit automate, d'un message d'acquittement.

6. Ordinateur selon l'une des revendications 1 à 5, **caractérisé en ce que** chaque automate de sécurisation est propre à engendrer des messages de commande de lecture, respectivement d'écriture, de données dans ladite mémoire de travail (RAM).

7. Ordinateur selon l'une des revendications 1 à 6, **caractérisé en ce que**, pour une commande d'un automate de sécurisation en mode continu, l'ordinateur comprend :
- une pluralité de blocs de commande mémorisés dans ladite mémoire de travail (RAM) ;
- au moins une commande d'exécution successive de ces blocs de commande par ledit automate, indépendamment des interruptions de fin d'opération de l'automate.

8. Ordinateur selon l'une des revendications 1 à 7, **caractérisé en ce que** chaque sous-module d'entrée/sortie de sécurisation (11a, 12a, 13a) comporte au moins :
- un circuit d'interfaçage (110), connecté audit module d'interfaçage commun (10) ;
- une mémoire FIFO (113) d'envoi de données interconnectée audit circuit d'interfaçage et audit sous-module de chiffrement/déchiffrement respectivement de calcul/vérification de signature (11b, 12b, 13b), ladite mémoire FIFO d'envoi de données permettant l'écriture de données dans ledit sous-module ;
- une mémoire FIFO (114) de réception de données interconnectée audit circuit d'interfaçage et audit sous-module de chiffrement/déchiffrement respectivement de calcul/vérification de signature (11b, 12b, 13b), ladite mémoire FIFO de réception de données permettant la lecture de données dans ledit sous-module ;
- un module de commande (111) des mémoires FIFO d'envoi et de réception de données ;
- un module de contrôle d'accès direct mémoire (112) interconnecté en entrée et en sortie audit circuit d'interfaçage.

9. Ordinateur selon la revendication 8, **caractérisé en ce que**, pour la réalisation d'opérations d'entrée/sortie de données, chaque sous-module d'entrée/sortie de sécurisation (11a, 12a, 13a) est propre à, suite à l'activation dudit signal de sélection :
- lire, en mémoire de travail (RAM), un bloc de commande à exécuter ;
- initialiser un module de contrôle d'accès direct mémoire (112), à partir de paramètres contenus dans ledit bloc de commande ;
- lire, en mémoire de travail, des clés de sécurisation de données et/ou du contexte de sécurisation de données appliquées par ledit automate ;
- lire, en mémoire de travail, des données à sécuriser, et transmettre ces données audit sous-module spécifique de chiffrement/déchiffrement respectivement de calcul/vérification de signature (11b, 12b, 13b) ;
- écrire, en mémoire de travail, des données sécurisées transmises par ledit sous-module spécifique de chiffrement/déchiffrement, respectivement de calcul/vérification de signature.

10. Ordinateur selon les revendications 8 et 9, **caractérisé en ce que**, pour assurer un échange de données entre ledit sous-module d'entrée/sortie de sécurisation (11a, 12a, 13a) et ledit sous-module spécifique de chiffrement/déchiffrement, respectivement de calcul/vérification de signature (11b, 12b, 13b), celui-ci comprend au moins :
- pour le contrôle de la mémoire FIFO (113) d'envoi de données :
- un signal de contrôle (RDUSEDW IN) indiquant le nombre de mots contenus dans ladite mémoire FIFO d'envoi de données ;
- un signal de commande de lecture dans ladite mémoire FIFO d'envoi de données d'un mot de données ou de commande ;
- pour le contrôle de la mémoire FIFO (114) de réception de données :
- un signal de commande de temporisation de la sortie des données dudit sous-module spécifique de chiffrement/déchiffrement respectivement de calcul/vérification de signature en fonction de la disponibilité de ladite mémoire FIFO de réception de données ;
- un signal de commande d'écriture dans ladite mémoire FIFO de réception de données d'un mot de données.

11. Ordinateur selon la revendication 10, **caractérisé en ce qu'**il comporte en outre un message de signalisation permettant, à partir dudit sous-module spécifique de chiffrement/déchiffrement respectivement de calcul/vérification de signature (11b, 12b, 13b), d'indiquer audit sous-module d'entrée/sortie de sécurisation (11a, 12a, 13a) le chargement du dernier mot chiffré ou déchiffré transmis par ledit sous-module de chiffrement/déchiffrement respectivement de calcul/vérification de signature.

12. Ordinateur selon l'une des revendications 1 à 11, **caractérisé en ce que** ledit module d'interfaçage commun (10) comprend au moins :
- un premier module de multiplexage (10a) des données et des messages de commande émanant des circuits de sécurisation ;
- un deuxième module de démultiplexage (10a) des données ou des messages de commande destinés aux circuits de sécurisation, ledit deuxième module de multiplexage étant interconnecté audit premier module de multiplexage ;
- un module de gestion (10c) de la priorité d'accès de chaque circuit de sécurisation, constituant automate de sécurisation, à ladite mémoire de travail, ledit module de gestion étant interconnecté audit deuxième module de multiplexage ;
- un module de comptage de commandes et d'interruptions (10b) comportant au moins un compteur de commandes et un compteur d'interruptions.

## Patentansprüche

1. Computer vom Typ, der ein Motherboard (MB), das einen ersten Mikroprozessor (µP₁), einen Arbeitsspeicher (RAM), der mit dem ersten Mikroprozessor assoziiert ist, und einen Anschluss (SIO) umfasst, und eine Karte mit Verschlüsselungsfunktion (PCA) umfasst, die in den Anschluss des Motherboards eingesetzt wird und einen zweiten Mikroprozessor (µP₂), einen Schlüsselspeicher (KM) und ein Modul (1) zur Datensicherung mittels Verschlüsselung/Entschlüsselung und/oder Unterschrift/Unterschriftsprüfung umfasst, wobei dieses Modul (1) eine Vielzahl von Sicherungsschaltkreisen (11, 12, 13) und mindestens ein gemeinsames Schnittstellenmodul (10), das sich zwischen dem ersten Mikroprozessor und der Vielzahl von Sicherungsschaltkreisen befindet, umfasst, wobei die Sicherungsschaltkreise mit dem gemeinsamen Schnittstellenmodul parallel geschaltet sind und jeweils ermöglichen, die Verschlüsselung/Entschlüsselung bzw. die Unterschriftsberechnung/-prüfung von Daten, die von dem gemeinsamen Schnittstellenmodul empfangen bzw. an dieses übertragen werden, sicherzustellen, wobei jeder Sicherungsschaltkreis Folgendes umfasst:
- ein Sicherungseingangs-/-ausgangsuntermodul (11a, 12a, 13a), das mit dem gemeinsamen Schnittstellenmodul (10) zusammengeschaltet ist; und
- ein spezifisches Verschlüsselungs-/Entschlüsselungs- bzw. Unterschriftsberechnungs-/- prüfungsuntermodul (11b, 12b, 13b),
**dadurch gekennzeichnet, dass** jeder Sicherungsschaltkreis (11, 12, 13), der einen Sicherungsautomat bildet, unter der Kontrolle des ersten Mikroprozessors (µP₁) mithilfe des gemeinsamen Schnittstellenmoduls (10) im direkten Speicherzugangsmodus in dem Arbeitsspeicher (RAM) betrieben wird,
dadurch, dass der erste Mikroprozessor (µP₁) zum Lenken des Sicherungsschaltkreises zu Folgendem geeignet ist:
- Initialisieren eines Automaten mittels Übermittlung einer Adresse einer Arbeitsspeicherzone, die dem Automaten zugeteilt ist;
- Hineinschreiben eines auszuführenden Befehlsblocks in die Arbeitsspeicherzone, die einem initialisierten Automaten zugeteilt ist;
- Übertragen eines Auslösebefehls an das gemeinsame Schnittstellenmodul, der einen Auswahlbefehl aktiviert, der von einem initialisierten Automaten erzeugt wird, wobei der Auswahlbefehl aus einem Befehl zum Lesen der Arbeitsspeicherzone, die dem initialisierten Automaten zugeteilt ist, besteht, wobei der Auswahlbefehl mittels des spezifischen Verschlüsselungs-/Entschlüsselungsuntermoduls an das Sicherungseingangs-/- ausgangsuntermodul und an das gemeinsame Schnittstellenmodul übertragen wird,
und dadurch, dass das Sicherungseingangs-/- ausgangsuntermodul (11a, 12a, 13a) dazu eingerichtet ist, den Befehlsblock in dem Arbeitsspeicher (RAM) zu lesen und den Befehlsblock an das spezifische Verschlüsselungs-/Entschlüsselungsuntermodul (11b, 12b, 13b) zur Ausführung zu übermitteln.

2. Computer nach Anspruch 1, **dadurch gekennzeichnet, dass** das Sicherungsmodul (1) eine Vielzahl von identischen Sicherungsschaltkreisen (11, 12, 13) umfasst, die ermöglichen, eine parallele Sicherungsbearbeitung von Daten sicherzustellen.

3. Computer nach Anspruch 1 oder Anspruch 2, **dadurch gekennzeichnet, dass** der erste Mikroprozessor (µP₁) dazu geeignet ist, einen Befehlsblock hineinzuschreiben, der mindestens Folgendes umfasst:
- ein spezifisches Befehlsdefinitionsfeld vom Typ eines Verfahrens zur Sicherung und zur Aktivierung eines spezifischen Verschlüsselungs-/Entschlüsselungsuntermoduls zur Unterschriftsberechnung/-prüfung (11b, 12b, 13b);
- ein Adressfeld eines Zwischenspeichers, der zu sichernde Daten bzw. gesicherte Daten enthält;
- ein Größenfeld eines Zwischenspeichers;
- ein Adressfeld der Adresse des Schlüssels zur Verschlüsselung/Entschlüsselung, Unterschriftsberechnung/-prüfung;
- ein Kontextadressfeld, wobei der Kontext ermöglicht, Parameter in Bezug auf das genannte Datensicherungsverfahren zu definieren.

4. Computer nach Anspruch 3, **dadurch gekennzeichnet, dass** die Gesamtheit von Befehlsblöcken in Bezug auf einen Sicherungsautomaten in der Form einer API-Anwendung in dem Arbeitsspeicher (RAM) eingeführt wird.

5. Computer nach einem der Ansprüche 1 bis 4, **dadurch gekennzeichnet, dass** beim Empfang eines Auslösebefehls, der von dem ersten Mikroprozessor (µP₁) erzeugt wird, das Sicherungsmodul (1) dazu geeignet ist, Folgendes durchzuführen:
- Lesen des Befehlsblocks in dem Arbeitsspeicher (RAM) durch das Sicherungseingangs-/-ausgangsuntermodul (11a, 12a, 13a), das mit dem gemeinsamen Schnittstellenmodul (10) zusammengeschaltet ist, und Übermitteln an das spezifische Verschlüsselungs-/Entschlüsselungs- bzw. Unterschriftsberechnungs-/- prüfungsuntermodul (11b, 12b, 13b) zur Ausführung des Befehlsblocks, und im Anschluss an die Ausführung des Befehlsblocks durch das spezifische Untermodul:
- Übertragen einer Nachricht des Abschlusses der Ausführung durch das spezifische Untermodul (11b, 12b, 13b) mithilfe des Sicherungseingangs-/- ausgangsuntermoduls (11a, 11b, 11c) und des Schnittstellenmoduls (10) an den ersten Mikroprozessor (µP₁), die ermöglicht, eine Bearbeitungsunterbrechung zu erzeugen; und im Anschluss an den Empfang dieser Bearbeitungsunterbrechung durch den ersten Mikroprozessor (µP₁),
- Übertragen einer Bestätigungsnachricht durch den ersten Mikroprozessor (µP₁) an das gemeinsame Schnittstellenmodul (10) und den Automaten.

6. Computer nach einem der Ansprüche 1 bis 5, **dadurch gekennzeichnet, dass** jeder Sicherungsautomat dazu geeignet ist, Befehlsnachrichten zum Lesen bzw. Schreiben von Daten in den Arbeitsspeicher (RAM) zu erzeugen.

7. Computer nach einem der Ansprüche 1 bis 6, **dadurch gekennzeichnet, dass** für einen Befehl eines Sicherungsautomaten im Dauermodus der Computer Folgendes umfasst:
- eine Vielzahl von Befehlsblöcken, die in dem Arbeitsspeicher (RAM) gespeichert sind;
- mindestens einen Befehl zur sukzessiven Ausführung dieser Befehlsblöcke durch den Automaten, unabhängig von Unterbrechungen des Abschlusses des Betriebs des Automaten.

8. Computer nach einem der Ansprüche 1 bis 7, **dadurch gekennzeichnet, dass** jedes Sicherungseingangs-/- ausgangsuntermodul (11a, 12a, 13a) mindestens Folgendes umfasst:
- einen Schnittstellenschaltkreis (110), der mit dem gemeinsamen Schnittstellenmodul (10) verbunden ist;
- einen FIFO-Speicher (113) zum Senden von Daten, der mit dem Schnittstellenschaltkreis und dem Verschlüsselungs-/Entschlüsselungs- bzw. Unterschriftsberechnungs-/-prüfungsuntermodul (11b, 12b, 13b) zusammengeschaltet ist, wobei der FIFO-Speicher zum Senden von Daten das Schreiben von Daten in das Untermodul ermöglicht;
- einen FIFO-Speicher (114) zum Empfangen von Daten, der mit dem Schnittstellenschaltkreis und dem Verschlüsselungs-/Entschlüsselungs- bzw. Unterschriftsberechnungs-/-prüfungsuntermodul (11b, 12b, 13b) zusammengeschaltet ist, wobei der FIFO-Speicher zum Empfangen von Daten das Lesen von Daten in dem Untermodul ermöglicht;
- ein Befehlsmodul (111) der FIFO-Speicher zum Senden und zum Empfangen von Daten;
- ein Modul (112) zur direkten Speicherzugangskontrolle, das mit einem Eingang und einem Ausgang des Schnittstellenschaltkreises zusammengeschaltet ist.

9. Computer nach Anspruch 8, **dadurch gekennzeichnet, dass** zur Durchführung von Dateneingangs-/- ausgangsarbeitsvorgängen jedes Sicherungseingangs-/- ausgangsuntermodul (11a, 12a, 13a) im Anschluss an die Aktivierung des Auswahlsignals zu Folgendem geeignet ist:
- Lesen eines auszuführenden Befehlsblocks in einem Arbeitsspeicher (RAM);
- Initialisieren eines Moduls (112) zur direkten Speicherzugangskontrolle ausgehend von Parametern, die in dem Befehlsblock enthalten sind;
- Lesen von Schlüsseln zur Datensicherung und/oder des Kontexts zur Datensicherung, die auf den Automaten angewendet werden, in einem Arbeitsspeicher;
- Lesen von zu sichernden Daten in einem Arbeitsspeicher und Übertragen dieser Daten an das spezifische Verschlüsselungs-/Entschlüsselungs- bzw. Unterschriftsberechnungs-/-prüfungsuntermodul (11b, 12b, 13b) ;
- Schreiben von gesicherten Daten, die von dem spezifischen Verschlüsselungs-/Entschlüsselungs- bzw. Unterschriftsberechnungs-/-prüfungsuntermodul übertragen wurden, in einen Arbeitsspeicher.

10. Computer nach den Ansprüchen 8 und 9, **dadurch gekennzeichnet, dass** zum Sicherstellen eines Datenaustauschs zwischen dem Sicherungseingangs-/- ausgangsuntermodul (11a, 12a, 13a) und dem spezifischen Verschlüsselungs-/Entschlüsselungs- bzw. Unterschriftsberechnungs-/-prüfungsuntermodul (11b, 12b, 13b) dieses mindestens Folgendes umfasst:
- zur Kontrolle des FIFO-Speichers (113) zum Senden von Daten:
- ein Kontrollsignal (RDUSEDW IN), das die Anzahl von Wörtern angibt, die in dem FIFO-Speicher zum Senden von Daten enthalten sind;
- ein Befehlssignal zum Lesen eines Daten- oder Befehlsworts in dem FIFO-Speicher zum Senden von Daten;
- zur Kontrolle des FIFO-Speichers (114) zum Empfangen von Daten:
- ein Befehlssignal zum Verzögern der Datenausgabe des spezifischen Verschlüsselungs-/Entschlüsselungs- bzw. Unterschriftsberechnungs-/-prüfungsuntermodul in Abhängigkeit von der Verfügbarkeit des FIFO-Speichers zum Empfangen von Daten;
- ein Befehlssignal zum Schreiben eines Datenworts in den FIFO-Speicher zum Empfangen von Daten.

11. Computer nach Anspruch 10, **dadurch gekennzeichnet, dass** er außerdem eine Signalisierungsnachricht umfasst, die ermöglicht, ausgehend von dem spezifischen Verschlüsselungs-/Entschlüsselungs- bzw. Unterschriftsberechnungs-/- prüfungsuntermodul (11b, 12b, 13b) das Laden des letzten verschlüsselten oder entschlüsselten Worts, das von dem Verschlüsselungs-/Entschlüsselungs- bzw. Unterschriftsberechnungs-/-prüfungsuntermodul übertragen wurde, dem Sicherungseingangs-/-ausgangsuntermodul (11a, 12a, 13a) gegenüber anzugeben.

12. Computer nach einem der Ansprüche 1 bis 11, **dadurch gekennzeichnet, dass** das gemeinsame Schnittstellenmodul (10) mindestens Folgendes umfasst:
- ein erstes Modul (10a) zum Multiplexieren von Daten und Befehlsnachrichten, die von Sicherungsschaltkreisen ausgehen;
- ein zweites Modul (10a) zum Demultiplexieren von Daten oder Befehlsnachrichten, die für die Sicherungsschaltkreise bestimmt sind, wobei das zweite Multiplexiermodul mit dem ersten Multiplexiermodul zusammengeschaltet ist;
- ein Modul (10c) zum Verwalten der Priorität des Zugangs jedes Sicherungsschaltkreises, der einen Sicherungsautomaten bildet, auf den Arbeitsspeicher, wobei das Verwaltungsmodul mit dem zweiten Multiplexiermodul zusammengeschaltet ist;
- ein Modul (10b) zum Zählen von Befehlen und Unterbrechungen, das mindestens ein Befehlszählwerk und ein Unterbrechungszählwerk umfasst.

## Claims

1. Computer of the type comprising a motherboard (MB), comprising a first microprocessor (µP₁), a working memory (RAM) associated to the first microprocessor and a connector (SIO), and a card with a cryptographic function (PCA), introduced in the connector of the motherboard, and comprising a second microprocessor (µP₂), a key memory (KM), and a module (1) for securing data by encryption/decryption and/or signature/verification of signature, wherein this module (1) comprises a plurality of securing circuits (11, 12, 13), and at least one common interfacing module (10), located between the first microprocessor and the plurality of securing circuits, wherein the securing circuits are connected in parallel to said common interfacing module, and each making it possible to ensure the encryption/decryption or respectively the calculation/verification of signature, of data received from or respectively sent to said common interfacing module, wherein each securing circuit comprises:
- an input/output sub-module for securing (11a, 12a, 13a) interconnected to said common interfacing module (10); and,
- a specific sub-module for encryption/decryption or respectively for calculation/verification of signature (11b, 12b, 13b),
**characterized in that** each securing circuit (11, 12, 13) constituting a securing automaton operates, under the control of the first microprocessor (µP₁) using the common interfacing module (10), in direct memory access mode in the working memory (RAM),
and **in that** the first microprocessor (µP₁) is suitable for, in order to drive said securing circuit:
- initializing an automaton by communication of an address of a zone in the working memory allocated to said automaton;
- enter a command block to be executed in the zone in the working memory allocated to an initialized automaton;
- transmitting to the common interfacing module a start command that activates a selection command generated by an initialized automaton, wherein the selection command consists of a command for reading in the zone in the working memory allocated to said initialized automaton, wherein the selection command is transmitted by the specific sub-module for encryption/decryption to the input/output sub-module for securing and to the common interfacing module,
and **in that** the input/output sub-module for securing (11a, 12a, 13a) is adapted for reading in the working memory (RAM) the command block and for communicating the command block to the specific sub-module for encryption/decryption (11b, 12b, 13b) for execution.

2. Computer according to claim 1, **characterized in that** said module for securing (1) comprises a plurality of identical securing circuits (11, 12, 13), which makes it possible to ensure parallel processing for securing data.

3. Computer according to claim 1 or claim 2, **characterized in that** the first microprocessor (µP₁) is suitable for entering a command block comprising at least:
- a specific command definition field of the type of process for securing and activating a specific sub-module for encryption/decryption of calculation/ verification of signature (11b, 12b, 13b);
- a buffer memory address field containing data to be secured or respectively secured data;
- a buffer memory size field;
- an address field for the address of the key for encryption/ decryption, calculation/verification of signature;
- a context address field, wherein said context makes it possible to define parameters relating to the called process for securing data.

4. Computer according to claim 3, **characterized in that** all the command blocks relating to a securing automaton are embedded in the form of an application API in said working memory (RAM).

5. Computer according to one of claims 1 to 4, **characterized in that**, when receiving a start command generated by the first microprocessor (µP₁), the module for securing (1) is suitable for executing:
- reading, in said working memory (RAM), of said command block by said input/output sub-module for securing (11a, 12a, 13a), interconnected to said common interfacing module (10) and communicating for execution of said command block to said specific sub-module for encryption/decryption or respectively for calculation/verification of signature (11b, 12b, 13b), and following execution of said command block by said specific sub-module;
- transmission, from said specific sub-module (11b, 12b, 13b) to said first microprocessor (µP₁), by means of the said input/output sub-module for securing (11a, 12a, 13a) and said interfacing module (10), of an end of execution message permitting generation of an interruption of processing; and following the receipt of this interruption of processing by the first microprocessor (µP₁),
- transmission, from the first microprocessor (µP₁) to said common interfacing module (10) and said automaton, of a message of acknowledgement.

6. Computer according to one of claims 1 to 5, **characterized in that** each securing automaton is suitable for generating command messages to read or respectively to write data in said working memory (RAM).

7. Computer according to one of claims 1 to 6, **characterized in that**, for a command of a securing automaton in continuous mode, the computer comprises:
- a plurality of command blocks memorized in said working memory (RAM);
- at least one command for successive execution of these command blocks by said automaton, independently of the interruptions of end of operation of the automaton.

8. Computer according to one of claims 1 to 7, **characterized in that** each input/output sub-module for securing (11a, 12a, 13a) includes at least:
- an interfacing circuit (110), connected to said common interfacing module (10);
- a FIFO memory (113) for sending data which is interconnected to said interfacing circuit and to said sub-module for encryption/decryption or respectively for calculation/ verification of signature (11b, 12b, 13b), said FIFO memory for sending data permitting the writing of data in said sub-module;
- a FIFO memory (114) for receiving data which is interconnected to said interfacing circuit and to said sub-module for encryption/decryption or respectively calculation/verification of signature (11b, 12b, 13b), said FIFO memory for receiving data permitting the reading of data in said sub-module;
- a command module (111) for the FIFO memories for sending and receiving data;
- a direct memory access control module (112) interconnected at input and at output to said interfacing circuit.

9. Computer according to claim 8, **characterized in that**, in order to carry out data input/output operations, each input/output sub-module for securing (11a, 12a, 13a) is suitable for, following the activation of said selection signal:
- reading, in working memory (RAM), a block of command to be executed;
- initializing a direct memory access control module (112), from parameters contained in said block of command;
- reading, in working memory, keys for securing data and/or the context of securing data applied by said automaton;
- reading, in working memory, data to be secured, and transmitting these data to said specific sub-module for encryption/decryption or respectively for calculation/verification of signature (11b, 12b, 13b);
- writing, in working memory, secured data transmitted by said specific sub-module for encryption/decryption or respectively for calculation/verification of signature.

10. Computer according to claims 8 and 9, **characterized in that**, in order to ensure an exchange of data between said input/output sub-module for securing (11a, 12a, 13a) and said specific sub-module for encryption/decryption or respectively for calculation/ verification of signature (11b, 12b, 13b), this latter comprises at least:
- for the control of the FIFO memory (113) for sending data:
- a control signal (RDUSEDW_IN) indicating the number of words contained in said FIFO memory for sending data;
- a command signal to read in said FIFO memory for sending data a data or a command word;
- for the control of the FIFO memory (114) for receiving data:
- a command signal for time delay of the output of data of said specific sub-module for encryption/decryption or respectively for calculation/verification of signature as a function of the availability of said FIFO memory for receiving data;
- a command signal to write a data word in said FIFO memory for receiving data.

11. Computer according to claim 10, **characterized in that** it further comprises a signaling message which makes it possible, from said specific sub-module for encryption/decryption or respectively for calculation/verification of signature (11b, 12b, 13b), to indicate to said input/output sub-module for securing (11a, 12a, 13a) the loading of the last encrypted or decrypted word transmitted by said sub-module for encryption/decryption or respectively for calculation/verification of signature.

12. Computer according to one of claims 1 to 11, wherein said common interfacing module (10) comprises at least:
- a first module for multiplexing (10a) data and command messages emanating from the securing circuits;
- a second module for demultiplexing (10a) data or command messages intended for the securing circuits, wherein said second multiplexing module is interconnected to said first multiplexing module;
- a module for management (10c) of the access priority of each securing circuit, constituting a securing automaton, to said working memory, wherein said management module is interconnected to said second multiplexing module;
- a module for counting commands and interruptions (10b) including at least a command counter and an interruption counter.
